# EUROPÄISCHE PATENTANMELDUNG

(11) **EP 1 431 910 A1**
(43) Veröffentlichungstag der Anmeldung: **23.06.2004**
(21) Anmeldenummer: 02028083.0
(22) Anmeldetag: 17.12.2002
(51) Int. Cl.: G06K 19/07

(54) **Schaltungsanordnung und Verfahren zur lastmodulierten Datenübertragung von einem Transponder**

(71) Anmelder: Infineon Technologies AG, 81669 München (DE)
(72) Erfinder: Missoni, Albert, 8010 Graz (AT); Alihodzic, Admir, 8010 Graz (AT)
(74) Vertreter: Epping Hermann & Fischer

(57) **Zusammenfassung**

Die Erfindung betrifft eine Schaltungsanordnung und ein Verfahren zur Durchführung des Verfahrens zur Datenübertragung von einer Transponderanordnung (1) zu einer Sende-/Empfangsanordnung (2), wobei der Transponder mit der Sende-/Empfangsanordnung über ein elektromagnetisches Feld (3) koppelbar ist und der Transponder zur Datenübertragung das von der Sende-/Empfangsanordnung abgestrahlte Feld mittels einer zuschaltbaren Last (6) beeinflusst, wobei die zuschaltbare Last veränderbar ist.

## Beschreibung

Die Erfindung betrifft eine Transponderanordnung zur Datenübertragung zu einer Sende-/Empfangsanordnung, wobei der Transponder mit der Sende-/Empfangsanordnung über ein elektromagnetisches Feld koppelbar ist und der Transponder zur Datenübertragung das von der Sende-/Empfangsanordnung abgestrahlte Feld mittels einer zuschaltbaren Last beeinflusst.

Transponder, insbesondere kontaktlose Transponder, verfügen über keine eigene Stromversorgung, wobei die kontaktlosen Transponder die zu ihrem Betrieb notwendige Energie aus dem sie umgebenden elektromagnetischen Feld beziehen. Dabei wird von einer Sende-/Empfangsanordnung ein elektromagnetisches Feld erzeugt, das eine bestimmte Frequenz aufweist. Ein in dieses elektromagnetische Feld eingebrachter Transponder, dessen Empfangselemente auf die Frequenz des elektromagnetischen Feldes der Sende-/Empfangsanordnung abgestimmt sind, empfängt über dieses elektromagnetische Feld die zu seinem Betrieb notwendige Energie. Dieses, als induktive Kopplung bezeichnete Verfahren, ist eine Möglichkeit, mit der sich sowohl Daten als auch Energie übertragen lassen.

Die in dem Transponder zu dessen Betrieb zur Verfügung stehende Energie ist damit stark abhängig von der Feldstärke des ihn umgebenden elektromagnetischen Feldes, d. h. Abstandsschwankungen führen zu unterschiedlichen Feldstärken und damit zu unterschiedlichen Energiemengen zum Betrieb des Transponders.

Zur Datenübertragung von dem Transponder zur Sende-/Empfangsanordnung wird die Last der elektrischen Verbraucher in dem Transponder moduliert, d. h. im Wechsel der Datensignale verändert. Dies ist beschrieben in Rankl, W. und Effing, W., Handbuch der Chipkarten, Seite 115. Dort wird ein vorbestimmter Widerstand im Rhythmus der Daten zu- oder abgeschaltet und damit die Last im Rhythmus der Daten verändert, wobei sich diese Veränderung durch die induktive Kopplung auf die Sende-/Empfangsanordnung überträgt.

Durch die Veränderung des Abstands des Transponders zur Sende-/Empfangsanordnung während des Betriebs des Transponders erfolgt eine Veränderung der Versorgungsspannung im Verbraucherstromkreis des Transponders. Dies führt bei der oben erwähnten Lastmodulation dazu, daß bei Hinzuschalten der zusätzlichen Last nicht ausreichend Spannung für die weiteren Schaltkreise des Transponders zur Verfügung steht. Des weiteren führt dies dazu, daß die Modulationstiefe des an die Sende-/Empfangsanordnung übertragenen Signals nicht einstellbar ist. Modulationstiefe heißt, daß zur Modulation eine elektrische Spannung um einen vorbestimmten Anteil verringert wird. Dabei finden derzeit Modulationstiefen von 10 % oder 100 % Anwendung.

Es ist die Aufgabe der Erfindung, die Lastmodulation im Transponder so zu gestalten, daß stets ausreichend elektrische Spannung für die weiteren Schaltkreise des Transponders zur Verfügung steht und die Modulationstiefe des modulierten Signals vorbestimmbar ist.

Diese Aufgabe wird durch eine Transponderanordnung zur Datenübertragung zu einer Sende-/Empfangsanordnung, wobei der Transponder mit der Sende-/Empfangsanordnung über ein elektromagnetisches Feld koppelbar ist und der Transponder zur Datenübertragung das von der Sende-/Empfangsanordnung abgestrahlte Feld mittels einer zuschaltbaren Last beeinflusst, dadurch gelöst, daß die zugeschaltbare Last veränderbar ist.

Durch die Veränderbarkeit der zugeschalteten Last wird erreicht, daß die Spannung an den restlichen Verbrauchern einen vorbestimmten Mindestwert nicht unterschreitet und damit die Betriebsfähigkeit des Transponders auch während der Modulation sichergestellt ist. Des weiteren erreicht man mit der Veränderbarkeit in vorteilhafter Weise eine Konstanz der Modulationstiefe. Vorteilhaft an der erfindungsgemäßen Lastmodulation ist der einfache Aufbau, der sich durch einen veränderbaren Widerstand, z. B. in Form eines PMOS-Transistors, darstellen läßt. Der PMOS-Transistor ist dazu in Serie mit einem als Schalter fungierenden NMOS-Transistor geschaltet und bildet damit einen Parallelkreis zu den übrigen Verbrauchern des Transponders. Der als Schalter fungierende NMOS-Transistor schaltet somit im Rhythmus der zu übertragenden Daten die veränderbare Last in Form des PMOS-Transistors zu oder ab.

Der Widerstand des PMOS-Transistors ist über eine am Gate angelegte Spannung einstellbar. Diese Spannung ist wiederum regelbar, z. B. durch Software in Abhängigkeit von Parametern wie der Höhe der Eingangsspannung oder der gewünschten Modulationstiefe.

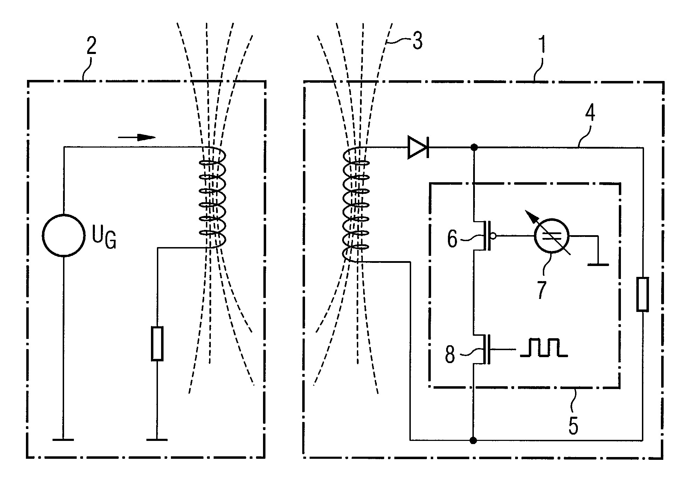

Im Folgenden ist die Erfindung anhand einer Figur und eines Ausführungsbeispiels näher beschrieben. Die Figur zeigt den prinzipiellen Aufbau der erfindungsgemäßen Schaltungsanordnung zur Durchführung des Verfahrens.

Die Figur zeigt dabei einen Transponder 1, der über ein elektromagnetisches Feld 3 mit einer Sende-/Empfangseinrichtung, die nachfolgende als Terminal bezeichnet wird, induktiv gekoppelt ist. Es handelt sich dabei um eine sogenannte lose induktive Kopplung, d. h. die beiden Spulen von Transponder 1 und Terminal 2 sind nicht über einen gemeinsamen Kern verbunden, sondern nur über das elektromagnetische Feld 3. Durch eine Veränderung der Last auf der Verbraucherseite der Transponder 1 überträgt sich diese Last durch die induktive Kopplung über das elektromagnetische Feld 3 an das Terminal 2. Wird nun die Last pulsierend verändert, d. h. im Rhythmus des Datenstroms, so werden somit die Daten von dem Transponder 1 auf das Terminal 2 übertragen. Durch variierende Abstände des Transponders 1 zum Terminal 2 variiert somit die Feldstärke und damit die aus der Feldstärke in dem Transponder 1 generierte Spannung. Es steht somit nicht in jedem Fall Spannung in voller Höhe zur Verfügung. Es ist damit vorteilhaft, mit dem PMOS-Transistor 6 in Verbindung mit dem NMOS-Transistor 8, der als Schalttransistor dient, eine veränderbare zuschaltbare Last zur Lastmodulation zu verwenden. Die beiden Transistoren 6 und 8 sind dabei zueinander in Serie geschaltet und parallel zu den weiteren Verbrauchern in dem Transponder. Die Steuersignale für den NMOS-Transistor sind die zu modulierenden Datensignale und liegen am Gate-Anschluß des NMOS-Transistors 8 an. Die Steuersignale für den PMOS-Transistor 6, der als veränderbare Last dient, werden über die symbolisch dargestellte Spannungsversorgung 7 dem Gate-Anschluß des PMOS-Transistors 6 zugeführt.

Die symbolische Darstellung der Spannungsversorgung 7 zeigt die vielfältigen Möglichkeiten und Parameter, die zur Steuerung der am Gate anliegenden Spannung einsetzbar sind. Dazu bieten sich an:
- eine Abhängigkeit der zur Verfügung stehenden Betriebsspannung sowie
- eine Abhängigkeit der gewünschten Modulationstiefe,
- eine Abhängigkeit von gegebenenfalls vorhandenen Energiespeichern und deren Ladungszustand,
- eine Abhängigkeit von den zu erwartenden Datenmengen, die zur Übertragung anstehen und vieles mehr.

Es ist mit der erfindungsgemäßen Anordnung somit erreichbar, daß in Abhängigkeit von den gewählten Parametern z. B. die Modulationstiefe einstellbar und steuerbar ist, sowie eine Gewährleistung erzielbar ist, daß stets ausreichend Betriebsspannung für die restlichen Verbraucher in dem Transponder zur Verfügung steht. So kann z. B. die Betriebsspannung der restlichen Verbraucher als Referenzspannung für die Einstellung der am Gate anliegenden Spannung verwendet werden.

### Bezugszeichenliste

- 1: Transponder
- 2: Sende-/Empfangseinrichtung, Terminal
- 3: elektromagnetisches Feld
- 4: Verbraucherkreis
- 5: Last
- 6: PMOS-Transistor
- 7: einstellbare Spannungsversorgung
- 8: NMOS-Transistor

## Patentansprüche

1. Transponderanordnung (1) zur Datenübertragung zu einer Sende-/Empfangsanordnung (2), wobei der Transponder (1) mit der Sende-/Empfangsanordnung (2) über ein elektromagnetisches Feld (3) koppelbar ist und der Transponder (1) zur Datenübertragung das von der Sende-/Empfangsanordnung (2) abgestrahlte Feld (3) mittels einer zuschaltbaren Last (5) beeinflusst,
**dadurch gekennzeichnet, daß**
die zuschaltbare Last (5) veränderbar ist.

2. Transponderanordnung nach Patentanspruch 1,
**dadurch gekennzeichnet, daß**
die zuschaltbare Last (5) ein PMOS-Transistor (6) ist.

3. Schaltungsanordnung nach Patentanspruch 2,
**dadurch gekennzeichnet, daß**
mit dem Gate-Anschluß des PMOS-Transistors (6) eine einstellbare Spannungsversorgung (7) verbunden ist.

4. Verfahren zur Datenübertragung von einem Transponder (1) zu einer Sende-/Empfangseinrichtung (2), wobei Transponder (1) und Sende-/Empfangseinrichtung (2) über ein elektromagnetisches Feld (3) koppelbar sind und durch den Transponder (1) zur Datenübertragung das von der Sende-/Empfangeinrichtung (2) abgestrahlte Feld mittels einer zuschaltbaren Last (5) beeinflußt wird,
**dadurch gekennzeichnet, daß**
die zuschaltbare Last (5) die Spannung im Verbraucherkreis (4) auf einen vorbestimmten Minimalwert moduliert, der nicht unterschritten wird.

5. Verfahren nach Patentanspruch 4,
**dadurch gekennzeichnet, daß**
die Spannung im Verbraucherkreis (4) um einen vorbestimmten Anteil abgesenkt wird.
